Europäisches Patentamt

European Patent Office

Office européen des brevets

(11) Veröffentlichungsnummer: **0 472 972 A1**

# EUROPÄISCHE PATENTANMELDUNG

(21) Anmeldenummer: **91113290.0**

(51) Int. Cl.⁵: **F16B 13/14**

(22) Anmeldetag: **08.08.91**

(30) Priorität: **02.03.91 DE 4106680**
**13.08.90 DE 9011748 U**

(43) Veröffentlichungstag der Anmeldung:
**04.03.92 Patentblatt 92/10**

(84) Benannte Vertragsstaaten:
**CH DE FR GB IT LI NL**

(71) Anmelder: **B + BTEC HOLDING AG**
**Leimackerstrasse 1**
**CH-3178 Bösingen(CH)**

(72) Erfinder: **van den Boogaart, Robert Wilhelm**
**Mezenlaan 4**
**NL-5130 NW Zaltbommel(NL)**
Erfinder: **Hashimoto, Koichi**
**No. 17 1-Chome, Minato-Ku**
**Nishi Shinbashi, Tokyo(JP)**
Erfinder: **van der Zalm, Antonie**
**Burgwal 4**
**NL-5301 GC Zaltbommel(NL)**

(74) Vertreter: **Lempert, Jost, Dipl.-Phys. Dr. et al**
**Patentanwälte Dipl.-Ing. Heiner Lichti**
**Dipl.-Phys. Dr. Jost Lempert Durlacher**
**Strasse 31 Postfach 410760**
**W-7500 Karlsruhe 41(DE)**

(54) **Klebstoffpatrone für einen Verbunddübel.**

(57) Um das Festlegen von Verbunddübeln in Stein- oder Betonwänden zu vereinfachen sieht die Erfindung eine Klebstoffpatrone (1) für einen Verbunddübel, mit einem Außengehäuse (2) und mit zwei Klebstoffkomponenten, nämlich Harz und Härter, die sich zu einem den Dübel in einem Bohrloch festlegenden Klebstoff verbinden vor, bei der in dem Außengehäuse ein Innengehäuse (4) angeordnet ist und daß sich eine erste Klebstoffkomponente im Innengehäuse und eine zweite Klebstoffkomponente im Zwischenraum (3) zwischen Innen- und Außengehäuse befindet.

Fig. 2

Die Erfindung betrifft eine Klebstoffpatrone für einen Verbunddübel, mit einem Außengehäuse und mit zwei Klebstoffkomponenten, nämlich Harz und Härter, die sich zu einem den Dübel in einem Bohrloch festlegenden Klebstoff verbinden.

Bei der Festlegung von Verbunddübeln in Stein oder Beton war es bisher notwendig, nach der Einbringung der Klebstoffpatrone in das Bohrloch und Zerstörung derselben durch Eindrücken des Dübels diesen beim Eindrücken in das Bohrloch um mehrere volle Umdrehungen zu drehen, um eine hinreichende Durchmischung von Harz und Härter zu erreichen, wobei der Härter oftmals pulverförmig war. Ein solcher Vorgang, bei dem der Dübel einerseits axial eingedrückt und andererseits gedreht werden mußte, ist relativ schwierig durchzuführen und aufwendig, da der Dübel einerseits unter erheblicher Kraft eingedrückt werden muß, beispielsweise durch Hammerschläge, hierbei aber nicht gleichzeitig gedreht werden kann, so daß das Eindrücken und Drehen abwechselnd vorgenommen werden mußte, wobei das Eindrehen aufgrund der durch den Harz bedingten relativ hohen Reibkräfte auch nicht von Hand geschehen konnte, sondern hierzu mit einem Werkzeug angegriffen werden mußte. Dies zeigt die Aufwendigkeit des Vorganges.

Es wurde darüberhinaus schon vorgeschlagen, eine Klebstoffpatrone zu schaffen, die in der Außenwandung ihres (Außen-) Gehäuses Wellen aufwies, in denen eine Härterbeschichtung angeordnet war und die zusätzlich auf einer Stirnseite eine Kappe mit einem Härter aufwies. Abgesehen davon, daß dieser Dübel in seiner Konstruktion sehr aufwendig und kompliziert und damit teuer ist, konnte die Härterbeschichtung nicht flüssig sein, sondern mußte vielmehr eine hinreichend feste Konsistenz haben, was wiederum die spätere Durchmischung mit dem in dem Außengehäuse befindlichen Harz erschwert. Auch konnte bei der üblichen Handhabung die Härterbeschichtung in den Rillen des Außengehäuses beschädigt oder teilweise entfernt werden, wodurch das richtige Mischungsverhältnis zwischen Harz und Härter beeinträchtigt wurde und damit die Festigkeit des späteren Verbunds mit dem Dübel ebenfalls beeinträchtigt werden konnte.

Der Erfindung liegt daher die Aufgabe zugrunde, eine Klebstoffpatrone für einen Verbunddübel zu schaffen, die bei einfacher und damit preiswerter Ausgestaltung einen einfachen Einsatz, insbesondere unter Vermeidung der Notwendigkeit eines Eindrehens des Dübels in das die Patrone enthaltende Bohrloch gestattet.

Erfindungsgemäß wird die genannte Aufgabe bei einer Klebstoffpatrone der eingangs genannten Art dadurch gelöst, daß in dem Außengehäuse ein Innengehäuse angeordnet ist und daß sich eine erste Klebstoffkomponente im Innengehäuse und eine zweite Klebstoffkomponente im Zwischenraum zwischen Innen- und Außengehäuse befindet.

Die erfindungsgemäße Ausgestaltung der Klebstoffpatrone mit einem Innengehäuse oder -Röhrchen ermöglicht die Verwendung eines flüssigen Härters mit geringer Zähigkeit, so daß in bevorzugter Ausgestaltung vorgesehen sein kann, daß der Härter flüssig ist. Ein solcher Härter erleichtert die innige Vermischung zwischen ihm und dem Harz und trägt damit zur Herstellung einer stabilen Klebverbindung zwischen Dübel und ihm umgebenden Bohrlochwandungen bei. Während das Innengehäuse grundsätzlich fest mit dem Außengehäuse verbunden sein könnte, beispielsweise an einer Stirnseite oder an Streben, sieht eine äußerst bevorzugte Ausgestaltung vor, daß das Innengehäuse frei im Harz angeordnet ist. Dadurch daß das Harz relativ zähflüssig ist, wird verhindert, daß Innengehäuse und Außengehäuse, die aus leicht zerbrechlichem Werkstoff bestehen, wie vorzugsweise Glas bestehen sollten, sich gegenseitig beim Transport oder bei Schlägen beschädigen, da die Bewegung des Innengehäuses im Außengehäuse durch den relativ zähen Harz stark gedämpft wird.

Insbesondere bei dieser Ausgestaltung sieht eine Weiterbildung vor, daß das Innengehäuse sich über nahezu die gesamte Länge des Außengehäuses erstreckt. Hierdurch wird auch ohne zusätzliche Fixierung des Innengehäuses zuverlässig sichergestellt, daß eine hinreichend gleichmäßige Verteilung und beim Zerbrechen der Patrone eine vollständig homogene Durchmischung der Klebstoffkomponente gegeben ist. Hierdurch wird die innige Vermischung zwischen Harz und Härter unterstützt, da sich das Innengehäuse, auch wenn es nicht fest mit dem Außengehäuse verbunden ist, nur um eine beschränkte Strecke innerhalb des Außengehäuses axial bewegen kann und damit über eine sehr große axiale Länge Kontaktflächen zwischen dem zu zerbrechenden Innengehäuse und damit dem in diesem befindlichen Härter sowie dem umgebenden Harz gegeben sind.

In einer bevorzugten Ausgestaltung kann vorgesehen sein, daß sich der Härter im Innengehäuse befindet und das Harz im Zwischenraum zwischen Außen- und Innengehäuse angeordnet ist.

Dann ist in bevorzugter Ausgestaltung weiterhin vorgesehen, daß der Durchmesser des Innengehäuses bezüglich des Außengehäuses relativ groß ist und nicht unter ein Viertel des Durchmessers des Außengehäuses liegen sollte. Er kann bis 2/3 des Durchmessers des Außengehäuses sein. In äußerst bevorzugter Ausgestaltung ist vorgesehen, daß der Durchmesser des Innengehäuses etwa ein Drittel des Durchmessers des Außengehäuses beträgt.

Bei einer noch vorteilhafteren alternativen Ausgestaltung ist vorgesehen, daß sich das Harz im Innengehäuse und der Härter im Zwischenraum zwischen Innen- und Außengehäuse befindet. In diesem Falle wird der Zwischenraum zwischen Innengehäuse und Außengehäuse wesentlich kleiner gewählt und es ist in bevorzugter Ausgestaltung vorgesehen, daß der Außendurchmesser des Innengehäuses mehr als 3/4 des Innendurchmessers des Außengehäuses beträgt.

Eine weitere bevorzugte Ausgestaltung sieht vor, daß das Innengehäuse vollständig von der im Zwischenraum zwischen Innen- und Außengehäuse befindlichen Klebstoffkomponente umgeben ist. Hierdurch wird der einzuschlagende Dübel oder die Ankerstange sofort stirnseitig benetzt, so daß eine innige Vermischung erfolgen kann.

Weitere äußerst bevorzugte Ausgestaltungen sehen vor, daß im Innen- und Außengehäuse lediglich die entsprechende Klebstoffkomponente füllstofffrei enthalten ist und/oder daß der Zwischenraum zwischen Innen- und Außengehäuse vollständig mit der entsprechenden Klebstoffkomponente ausgefüllt ist.

Ein wesentlicher Vorteil der Erfindung liegt darin, daß eine irgendwie gehärtete zusätzliche Fixierung des Innengehäuses im Außengehäuse wie durch Füllstoff oder dergleichen nicht vorgesehen und nicht erforderlich ist.

Weitere Vorteile und Merkmale der Erfindung ergeben sich aus den Ansprüchen und aus der nachfolgenden Beschreibung, in der ein Ausführungsbeispiel der erfindungsgemäßen Klebstoffpatrone unter Bezugnahme auf die Zeichnung im einzelnen erläutert ist. Dabei zeigt:

Figur 1 eine erste Ausgestaltung einer erfindungsgemäßen Klebstoffpatrone für einen Verbunddübel in Seitenansicht; und

Figur 2 eine andere bevorzugte Ausgestaltung der erfindungsgemäßen Klebstoffpatrone.

Die erfindungsgemäße Klebstoffpatrone 1 weist ein Außengehäuse 2 vorzugsweise aus dünnem Glas auf. Das Außengehäuse 2 ist als Röhrchen mit einem Querschnitt ausgebildet, der geringfügig unterhalb des Querschnitts des Bohrlochs liegt, in den die Klebstoffpatrone zur Festlegung eines Dübels eingesetzt werden soll. Ein vorderes Ende 3 der Klebstoffpatrone ist vorzugsweise kappenförmig abgerundet, um auch den inneren Stirnbereich des zu bohrenden Loches, der flach konisch ausgebildet ist, weitgehend auszufüllen. Im Außengehäuse 2 ist ein Innengehäuse 4 angeordnet. Dieses kann grundsätzlich fest mit dem Außengehäuse 2, beispielsweise mit dessen rückseitiger Stirnseite 6 verbunden sein. Das Innengehäuse 4 kann aber auch frei im Außengehäuse 2 beweglich sein.

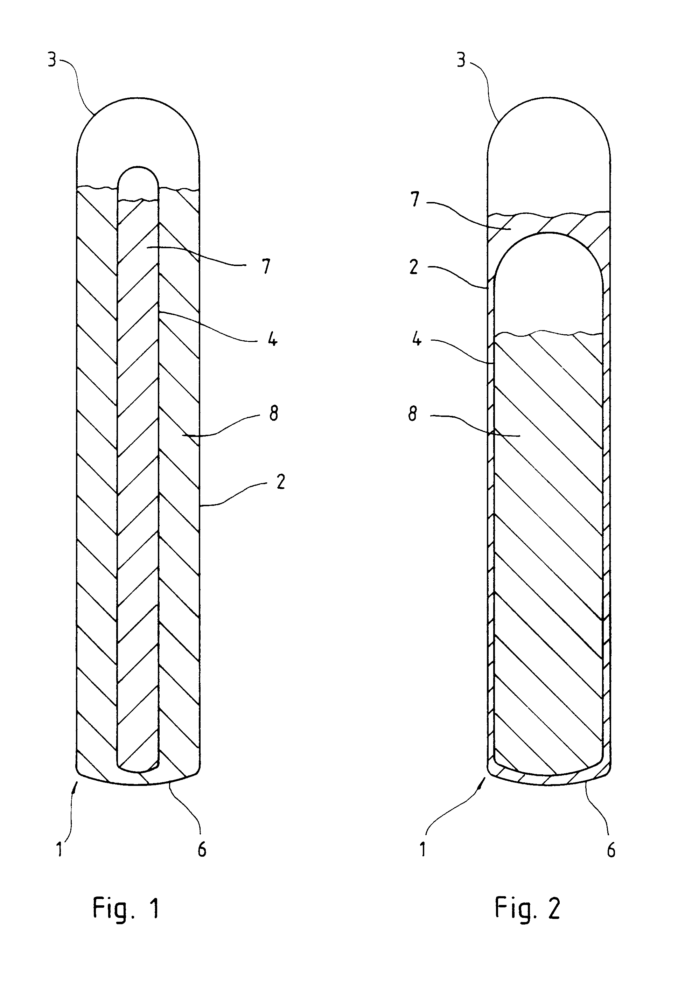

Im Innengehäuse befindet sich bei der Ausgestaltung der Figur 1 als Klebstoffkomponente ein flüssiger Härter, wie ein BPO-Härter 7 (Dibenzoylperoxid-Härter), während das Innengehäuse 4 innerhalb des Außengehäuses 2 von einem sehr zähflüssigen Harz 8 umgeben ist, der die Bewegungen des Innengehäuses 4 im Außengehäuse 2 derart dämpft, daß beide auch nicht bei Transport und Stößen aneinanderstoßen und sich gegenseitig beschädigen können. Hierdurch wird ermöglicht, daß das Innengehäuse 4 ansonsten frei im Außengehäuse 2 angeordnet sein kann und nicht mit diesem fest verbunden sein muß. Der Volumenanteil von Härter (und Füllstoff) im Innengehäuse am Gesamtvolumen der Patrone hängt von der Art derselben ab und beträgt bei herkömmlichen Standardpatronen zwischen 6 und 8,5 % und bei einer HaC-Patrone (Hammer Capsule = Hammer-Patrone) zwischen 16 und 21 %.

Das Innengehäuse 4 erstreckt sich in seiner Länge im wesentlichen über die Länge des Außengehäuses 2. Es weist einen relativ großen Querschnitt auf, der mindestens ein Viertel des Querschnitts des Außengehäuses sein soll und bis zu 2/3 des Querschnitts des Außengehäuses 3 betragen kann. Bei herkömmlichem 2-Komponentenklebstoff liegt vorzugsweise der Querschnitt des Innengehäuses 4 bei etwa einem Drittel des Querschnitts des Außengehäuses 2.

Die Figur 2 zeigt eine weitere äußerst bevorzugte Ausgestaltung einer erfindungsgemäßen Klebstoffpatrone 1. Gleiche Elemente sind mit den gleichen Bezugszeichen wie bei Figur 1 bezeichnet. Bei der Ausgestaltung der Figur 2 ist das Harz im Innengehäuse 4 angeordnet, während der flüssige Härter 7 sich innerhalb des Außengehäuses 2, aber außerhalb des Innengehäuses 4, also im Zwischenraum zwischen Außengehäuse 2 und Innengehäuse 4 befindet. Bei der Ausgestaltung der Figur 2 ist der relative Querschnitt des Innengehäuses 4 wesentlich größer als bei der Ausgestaltung der Figur 1. Bei einer Glasstärke von 0,5 mm kann der Außendurchmesser des Außengehäuses beispielsweise 10,5 mm, der Außendurchmesser des Innengehäuses 9 mm betragen, so daß nur ein enger Zwischenraum zwischen Innengehäuse 2 und Außengehäuse 4 verbleibt, in dem sich der flüssige Härter befindet. Bei einer anderen Ausgestaltung ist der Außendurchmesser des Außengehäuses 15 mm und der Außendurchmesser des Innengehäuses 13 mm bei etwa gleicher Glasstärke. Der flüssige Härter umgibt das Innengehäuse 4 jeweils vollständig, insbesondere auch an der oberen Stirnseite, von der her eine zu verklebende Ankerstange in den Dübel eingeschlagen wird. Beim Einschlagen der Ankerstange nimmt diese sogleich eine kleine Menge Härter mit und verfängt weiterhin beim weiteren Einschlagen den Harz aus dem Innengehäuse nach außen in den Bereich des Härters, so daß eine optimale Vermischung stattfindet. Ein Drehen der Ankerstange beim Einschlagen, wie dies beim Stand der Technik der Fall ist, ist hier nicht erforderlich.

Der Einsatz der erfindungsgemäßen Klebstoffpatrone zum Festkleben einer Ankerstange als Verbunddübel in einer Stein- oder Betonwand geschieht im einzelnen in folgender Weise:

Zunächst wird in an sich üblicher Weise das Bohrloch durch einen Bohrer mit Hilfe eines Schlagbohrers oder Bohrhammers gesetzt. Anschließend kann das Bohrloch gegebenenfalls gereinigt, das heißt staubfrei gemacht werden, durch Ausbürsten mit einer zylindrischen Bürste oder Ausblasen unter Druckluft. Anschließend wird die erfindungsgemäße Klebstoffpatrone in das Bohrloch eingedrückt und sodann der Verbunddübel eingeschlagen (wie mit einem Hammer). Hierbei wird die Klebstoffpatrone 1 und es werden insbesondere die Gehäuse 2, 4 zerbrochen, woraufhin sich durch das weitere und Tiefereinschlagen des Dübels Harz 8 und Härter 7 über die gesamte Länge des Bohrlochs hin innig vermischen. Ein Drehen des Dübels, wie es bisher notwendig war, um eine hinreichende Vermischung von Harz und Härter zu erreichen, ist nicht mehr notwendig. Nachdem der Dübel vollständig in das Bohrloch eingeschlagen wurde, härtet der durch Harz und Härter gebildete Klebstoff aus und hält nach vollständigem Aushärten den Dübel fest und zuverlässig im Bohrloch.

**Patentansprüche**

1. Klebstoffpatrone für einen Verbunddübel, mit einem Außengehäuse und mit zwei Klebstoffkomponenten, nämlich Harz und Härter, die sich zu einem den Dübel in einem Bohrloch festlegenden Klebstoff verbinden, dadurch gekennzeichnet, daß in dem Außengehäuse (2) ein Innengehäuse (4) angeordnet ist und daß sich eine erste Klebstoffkomponente (7; 8) im Innengehäuse (4) und eine zweite Klebstoffkomponente (8; 7) im Zwischenraum zwischen Innen- (4) und Außengehäuse (2) befindet.

2. Patrone nach Anspruch 1, dadurch gekennzeichnet, daß der Härter (7) flüssig ist.

3. Patrone nach Anspruch 1 oder 2, dadurch gekennzeichnet, daß das Innengehäuse (4) frei in der es umgebenden Klebstoffkomponente (7, 8) angeordnet ist.

4. Patrone nach einem der Ansprüche 1 bis 3, dadurch gekennzeichnet, daß das Innengehäuse (4) sich über nahezu die gesamte Länge des Außengehäuses (2) erstreckt.

5. Patrone nach einem der Ansprüche 1 bis 4, dadurch gekennzeichnet, daß Innen- und/oder Außengehäuse (4, 2) aus Glas bestehen.

6. Patrone nach einem der Ansprüche 1 bis 4, dadurch gekennzeichnet, daß sich der Härter (7) im Innengehäuse (4) befindet und das Harz (8) im Zwischenraum zwischen Außen- und Innengehäuse (2, 4) angeordnet ist.

7. Patrone nach Anspruch 6, dadurch gekennzeichnet, daß das Innengehäuse (4) einen Außendurchmesser hat, der etwa einem Viertel bis 2/3 des Innendurchmessers des Außengehäuses (2) entspricht.

8. Patrone nach Anspruch 7, dadurch gekennzeichnet, daß der Durchmesser des Innengehäuses (4) etwa ein Drittel des Durchmessers des Außengehäuses (2) beträgt.

9. Patrone nach einem der Ansprüche 1 bis 5, dadurch gekennzeichnet, daß sich das Harz (8) im Innengehäuse (4) und der Härter (7) im Zwischenraum zwischen Innen- und Außengehäuse (2, 4) befindet.

10. Patrone nach Anspruch 9, dadurch gekennzeichnet, daß der Außendurchmesser des Innengehäuses mehr als 3/4 des Innendurchmessers des Außengehäuses beträgt.

11. Patrone nach einem der vorangehenden Ansprüche, dadurch gekennzeichnet, daß das Innengehäuse (4) vollständig von der im Zwischenraum zwischen Innen- und Außengehäuse (2, 4) befindlichen Klebstoffkomponente (7; 8) umgeben ist.

12. Patrone nach einem der vorangehenden Ansprüche, dadurch gekennzeichnet, daß im Innen- und Außengehäuse (2, 4) lediglich die entsprechende Klebstoffkomponente (7; 8) füllstofffrei enthalten ist.

13. Patrone nach einem der vorangehenden Ansprüche, dadurch gekennzeichnet, daß der Zwischenraum zwischen Innen- und Außengehäuse (2, 4) vollständig mit der entsprechenden Klebstoffkomponente (7, 8) ausgefüllt ist.

Fig. 1

Fig. 2

# EUROPÄISCHER RECHERCHENBERICHT

Nummer der Anmeldung

## EP 91 11 3290

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 908 202   (WEBER,C)<br>* Seite 3, Zeile 9 - Seite 10, Zeile 36; Abbildungen 1,2 * *<br>— — — | 1-4,9-11, 13 | F 16 B 13/14 |
| X | EP-A-0 163 019   (HILTI)<br>* Seite 5, letzter Absatz - Seite 8, letzter Absatz; Abbildungen * *<br>— — — | 1,2,4-8, 12 | |
| X | DE-A-2 705 484   (UPAT-MAX)<br>* das ganze Dokument * *<br>— — — | 1,2 | |
| A | DE-A-1 935 150   (BECORIT GRUBENAUSBAU)<br>— — — — — | | |

|  |
|---|
| **RECHERCHIERTE SACHGEBIETE (Int. Cl.5)**<br><br>F 16 B<br>E 21 D |

Der vorliegende Recherchenbericht wurde für alle Patentansprüche erstellt

| Recherchenort | Abschlußdatum der Recherche | Prüfer |
|---|---|---|
| Den Haag | 04 Dezember 91 | ARESO Y SALINAS J. |